# FASCICULE DE BREVET EUROPEEN

(11) **EP 3 156 920 B1**
(45) Date de publication et mention de la délivrance du brevet: **26.09.2018**
(21) Numéro de dépôt: 16200765.2
(22) Date de dépôt: 04.04.2013
(51) Int. Cl.: H04L 12/26, H04L 29/08

(54) **PROCÉDÉ DE DIFFUSION D'UN CONTENU DANS UN RÉSEAU INFORMATIQUE**
VERFAHREN ZUR VERBREITUNG EINES INHALTS IN EINEM IT-NETZ
METHOD FOR BROADCASTING CONTENT IN A COMPUTER NETWORK

(30) Priorité: 05.04.2012 FR 1253152
(43) Date de publication de la demande: 19.04.2017
(62) Demande divisionnaire de: 13724399.4
(73) Titulaire: Easybroadcast, 44230 Saint Sebastien Sur Loire (FR)
(72) Inventeur: ROUIBIA, Soufiane, 44230 Saint Sebastien sur Loire (FR)
(74) Mandataire: Nony

(56) Documents cités:
- GB-A- 2 412 279
- US-A1- 2008 205 291
- ROUIBIA SOUFIANE ET AL: "P2PWeb-Live: A client/server and P2P hybrid protocol for IPTV delivery", 2015 INTERNATIONAL CONFERENCE ON PROTOCOL ENGINEERING (ICPE) AND INTERNATIONAL CONFERENCE ON NEW TECHNOLOGIES OF DISTRIBUTED SYSTEMS (NTDS), IEEE, 22 juillet 2015 (2015-07-22), pages 1-6, XP032791607, DOI: 10.1109/NOTERE.2015.7293492 [extrait le 2015-10-06]

## Description

La présente invention se rapporte à la diffusion d'un contenu au sein d'un réseau informatique, et plus particulièrement mais non exclusivement à la diffusion d'un contenu sur la toile (Web).

Il est connu de la demande EP 2 109 289 de disposer d'un système de diffusion d'un contenu dans lequel un utilisateur, qui dispose dudit contenu, l'envoie à d'autres utilisateurs selon un mode d'échange pair-à-pair (P2P), en utilisant une base de données comportant des informations concernant les utilisateurs. Le contenu à diffuser n'est pas enregistré dans le système de diffusion.

Des réseaux de diffusion P2P d'un contenu sont connus, notamment de la demande US 2008/0205291.

A l'exception des messageries instantanées, du « chat » et de certains logiciels P2P, la plupart des applications Internet sont fondées sur un modèle traditionnel client/serveur. L'architecture client/serveur s'appuie sur un poste central, le serveur, qui envoie les données aux machines clientes.

La demande GB 2 412 279 décrit une méthode de diffusion où un contenu peut être alternativement diffusé en mode client/serveur, d'un serveur central à un utilisateur, ou en mode P2P, d'un utilisateur faisant office de serveur à un autre utilisateur.

Plusieurs limites du fonctionnement au Web ont commencé à apparaître après l'avènement des connexions haut débit et l'augmentation fulgurante de la taille des contenus (vidéo HD, images de grande résolution ...) véhiculés sur Internet.

Bien que les applications Web aient considérablement évolué en profitant de l'expérience utilisateur et des aspects communautaires, le paradigme client/serveur impose toujours des limitations techniques et fonctionnelles au niveau utilisateur à cette évolution.

Le coût de fonctionnement d'une application Web constitue l'une de ces limitations. Généralement le coût de développement d'un service Internet est relativement faible. Cependant, le coût de fonctionnement, qui est essentiellement lié à la bande passante et à l'espace de stockage, est assez élevé au détriment de ce qui peut être offert aux utilisateurs. Par exemple, fournir des médias (photos, audio, vidéo) libres de droit implique un investissement continu qui est difficile à amortir.

De plus, actuellement, l'interruption d'une connexion avec le serveur entraîne l'arrêt pur et simple du service fourni.

L'alternative utilisée pour faire face aux problématiques de saturation des serveurs en cas de forte affluence des Internautes sur un site Internet consiste à faire appel au service d'entreprises qui proposent des CDN (Content Delivery Network). Cette solution a un coût très important pour le fournisseur de contenu et nécessite une surveillance permanente des serveurs en cas de surcharge des réseaux afin d'augmenter la bande passante et la taille des serveurs. Une telle solution est adaptée à fiabiliser la disponibilité du contenu pour une sollicitation moyenne mais n'arrive toujours pas à relever le défi en cas de très forte sollicitation ou d'une transmission en direct. Cela est dû au problème des pics d'audience et de leur régulation qui nécessite une bande passante abondante et un matériel adapté selon l'importance du pic.

Il existe par conséquent un besoin pour améliorer encore la diffusion d'un contenu au sein d'un réseau informatique et plus particulièrement sur la toile, et notamment éliminer définitivement et au moindre coût les problèmes de congestion des réseaux.

L'invention y parvient grâce à un procédé de diffusion d'un contenu dans un réseau informatique selon la revendication 1 et un programme correspondant selon la revendication 8.

L'invention permet de combiner le paradigme du pair-à-pair au traditionnel modèle client/serveur des applications Web pour tirer profit des avantages de ces deux architectures.

L'invention offre une solution fondée sur une technologie P2P adaptée à un environnement Web et couplée à un fonctionnement client/serveur classique. Cette solution hybride est intégrable, notamment sous forme de plug-in, dans tous les navigateurs Web et permet de distribuer des contenus multimédia en réduisant les coûts d'infrastructure et de bande passante pour les fournisseurs de contenus, en conservant la même qualité de service pour l'internaute.

L'invention permet d'accélérer et de fluidifier l'accès à certains services très sollicités, notamment lors d'événements particuliers (manifestations sportives, festivités ...) ou d'informations déposées sous forme de contenu multimédia, par exemple des documents ou des vidéos de plus de 30 Mo déposés sur des sites d'information.

L'invention concerne tout type de contenu récupérable ou visualisable, par exemple une vidéo en direct, sur le Web via un navigateur.

L'invention permet que les ressources, notamment l'espace de stockage et la bande passante, de l'internaute soient impliquées d'une façon relativement faible. L'espace de stockage investi par l'internaute peut ne pas dépasser le cache déjà utilisé par les applications Web.

Le coût d'exploitation de l'invention est faible du fait que celle-ci bénéficie de la nature même de l'architecture P2P. En effet, les fournisseurs de contenus peuvent décharger l'essentiel du traitement des services à leurs utilisateurs finaux et se limiter, une fois la diffusion amorcée, à jouer le rôle d'annuaire tout en offrant des services plus attrayants à leurs internautes. L'invention permet que la continuité du service soit assurée par le nombre d'internautes partageant le même contenu.

L'invention permet aux petits et grands fournisseurs de contenus de proposer à leur internautes une Qualité de Service (QoS) équivalente, voire supérieure, à un CDN et ce à moindre coût.

Le serveur de contenu peut répertorier les clients qui ont déjà récupéré une partie du contenu et adresser à un nouveau client cherchant à récupérer le contenu l'adresse d'au moins un autre client auprès duquel il peut récupérer au moins une pièce de ce contenu.

Le serveur de contenu détermine la ou les pièces les plus manquantes dans le swarm, le serveur de contenu adressant à un nouveau client au moins l'une des pièces identifiées comme les plus manquantes afin de faciliter son intégration dans le swarm et de permettre une diffusion des pièces plus rapide que dans un système de diffusion P2P classique.

L'information associée comporte de préférence le hash.

Un module de suivi de qualité de service est avantageusement utilisé pour récupérer au moins un paramètre de qualité de service des clients.

Le nombre de connexions autorisées client/serveur, c'est-à-dire le nombre de connexions maximal avant que le serveur bascule en mode P2P, est de préférence fonction dudit au moins un paramètre.

Le nombre de connexions autorisées entre les internautes peut être limité si la connexion de l'internaute émetteur du contenu n'est pas bonne, afin de limiter l'utilisation de sa bande passante.

Le procédé peut comporter la fourniture par le serveur de contenu à un client d'un programme à installer notamment sous forme de plug-in au niveau du navigateur de ce client pour pouvoir récupérer le contenu en mode client/serveur avec un format P2P et recevoir la liste des clients du serveur de contenu.

Le procédé peut comporter la détermination du mode de diffusion du contenu en temps réel, client/serveur ou P2P, en fonction de seuils prédéfinis, notamment QoS et QoE des clients récupérant le contenu.

Le procédé peut permettre la diffusion du contenu, en mode P2P, via les navigateurs des clients.

L'invention a encore pour objet, selon un autre de ses aspects, un produit programme d'ordinateur, comportant un programme informatique enregistré sur un support ou téléchargé, agencé pour, sur l'ordinateur d'un client :
- installer sur l'ordinateur une application qui permet, à partir du navigateur du client, lors de la connexion à un serveur de contenu agencé pour mettre en oeuvre le procédé selon l'invention :
- télécharger le contenu depuis le serveur en mode client/serveur par pièces compatibles avec sa diffusion en mode P2P à d'autres clients s'étant connectés au serveur de contenu ou, si le serveur n'offre pas cette possibilité,
- télécharger depuis le serveur une liste de clients disposant de pièces du contenu de façon à le récupérer dans un mode P2P auprès d'autres clients s'étant connectés au serveur de contenu.

Lors de la réception d'une nouvelle demande de connexion par le serveur de contenu, ce dernier détermine si le client dispose d'un programme permettant de mettre en oeuvre l'invention. Dans la négative, le serveur de contenu propose au client le téléchargement d'un programme sous forme de plug-in assurant la compatibilité protocolaire. Dans l'affirmative, le serveur de contenu met à jour des seuils et détermine si les seuils sont franchis et si le client doit être servi selon un mode P2P ou selon un mode client/serveur. Si les seuils du nombre de connexions ne sont pas franchis, le contenu peut être transmis en mode client/serveur. Le serveur de contenu répertorie les coordonnées du client qui va être servi en mode client/serveur. Le contenu est envoyé en petites pièces et en mode client/serveur http. Si les seuils sont franchis, le client sera servi en mode P2P.

Le serveur de contenu répertorie les coordonnées du client et lui envoie les coordonnées des clients, notamment l'adresse IP et le port, ainsi qu'au moins l'une des pièces.

Durant son exécution, après une demande de contenu au serveur, le programme récupère auprès du serveur de contenu le mode de téléchargement. Dans le cas où le serveur indique au programme que le contenu peut être récupéré en mode client/serveur, celui-ci est reçu sous forme de pièces du serveur de contenu. En cas de mode P2P, le programme récupère la liste des clients, notamment avec leurs coordonnées, et au moins une pièce du contenu, de préférence l'une au moins des plus manquantes. Le programme se connecte alors au swarm et récupère le contenu. Le contenu récupéré par pièces est reconstruit par le programme en vue de sa lecture et/ou affichage.

Le programme peut en outre récupérer des informations concernant le contenu, telles que par exemple le hash du contenu, la taille du contenu ou celle des pièces. Si le contenu est de petite taille, par exemple inférieure à 50 Mo, le programme peut récupérer les hashs des pièces. Si le contenu est de grande taille, par exemple supérieure à 50 Mo, à chaque réception d'une pièce, le client peut demander au serveur le hash de celle-ci afin de vérifier son authenticité. La sécurité du contenu est ainsi assurée par la centralisation au niveau du serveur de la diffusion des hashs des pièces.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 illustre, de façon schématique, une architecture permettant la mise en oeuvre de l'invention,
- la figure 2 représente schématiquement un diagramme de tâches du module manager, et
- la figure 3 représente schématiquement un diagramme de tâches du module plug-in du navigateur.

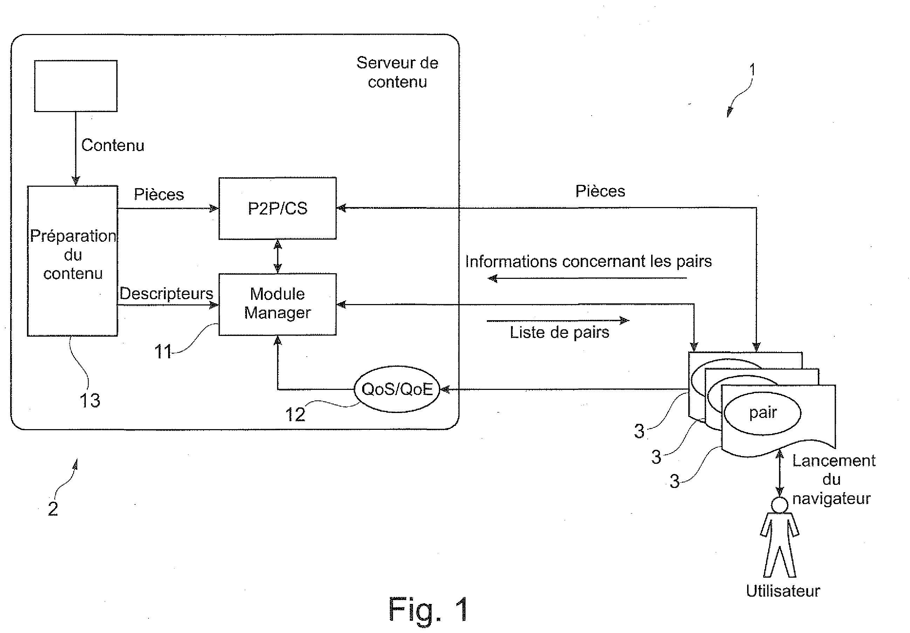

Le procédé selon l'invention peut être mis en oeuvre au sein d'une architecture globale 1, représentée schématiquement sur la figure 1, comportant un serveur de contenu 2 et plusieurs clients 3 constitués dans cet exemple par des internautes qui communiquent avec le serveur de contenu par l'intermédiaire du réseau Internet.

Contrairement à un fonctionnement pur P2P, le contenu à diffuser est toujours présent sur le serveur de contenu 2.

Au cours de la mise en oeuvre du procédé, le serveur 2 commence à servir en mode client/serveur les premiers clients internautes, encore appelés pairs.

Pour faciliter le basculement en mode P2P, le serveur 2 découpe le contenu en petites pièces (de 65 Ko à 1Mo en fonction de la taille et du type de contenu) et identifie chaque pièce du contenu.

Par exemple, les N-1 premiers internautes sont servis en mode client/serveur mais le contenu est envoyé en petites pièces avec des informations sur chacune de ces pièces, telles que numéro et identifiant, ce dernier comportant de préférence le hash.

Le mode client/serveur utilise ainsi le découpage en petites pièces du contenu et l'identification de chaque pièce pour faciliter le passage vers le mode P2P ainsi que la sécurisation du contenu sur les deux modes client/serveur et P2P.

À partir par exemple du Nième internaute et/ou le franchissement d'un ou plusieurs seuils prédéfinis, par exemple relatifs à la bande passante ou la charge CPU, le serveur 2 envoie au Nième internaute, nouvellement connecté, une liste d'internautes qui ont déjà récupéré une partie du contenu afin que le Nième internaute puisse commencer à récupérer le contenu en mode P2P à partir des internautes répertoriés par la liste. Le Nième internaute peut être le 100^{ième} ou le 200^{ième} ou plus en fonction de la puissance du serveur et des paramètres de Qualité de Service (QoS) et de Qualité d'Expérience (QoE) en retour des différents internautes.

Parmi les informations remontées au serveur par les internautes, en plus des paramètres QoS et QoE, chaque client envoie des informations sur la dernière pièce qu'il vient de télécharger et indique quel niveau de téléchargement est atteint. Ces informations permettent au serveur 2 de connaître les pièces les plus manquantes dans le « swarm », c'est-à-dire ici l'ensemble des clients qui consultent le serveur 2.

Un des grands problèmes des protocoles P2P est la lenteur de l'intégration du nouvel arrivant dans le swarm. Le nouvel arrivant n'a rien à proposer car il n'a aucune pièce et aucun client dans le swarm ne s'intéressera à lui, sauf ceux qui ont déjà tout téléchargé et qui sont appelés « seeds ».

S'il n'y a pas beaucoup de seeds, le nouveau client mettra plusieurs minutes pour s'intégrer au swarm.

Pour résoudre ce problème, en plus de la liste des clients et des informations sur le contenu, le serveur 2 envoie aussi au nouvel arrivant au moins l'une des pièces les plus manquantes dans le swarm pour permettre au nouveau client d'intégrer rapidement le swarm et de commencer les échanges avec les autres clients.

Toutes les fonctionnalités de l'échange P2P, telles que l'échange de la liste des clients entre internautes, notamment PEX² Peer Exchange, la récupération de la liste des clients *via* des moyens autres que le serveur de contenu, notamment DHT³ Table de hachage distribuée, peuvent être utilisées dans l'invention.

Le serveur de contenu 2 comporte des modules appelés module manager 11, module de suivi de qualité de service 12 et module préparateur du contenu 13.

### Module manager

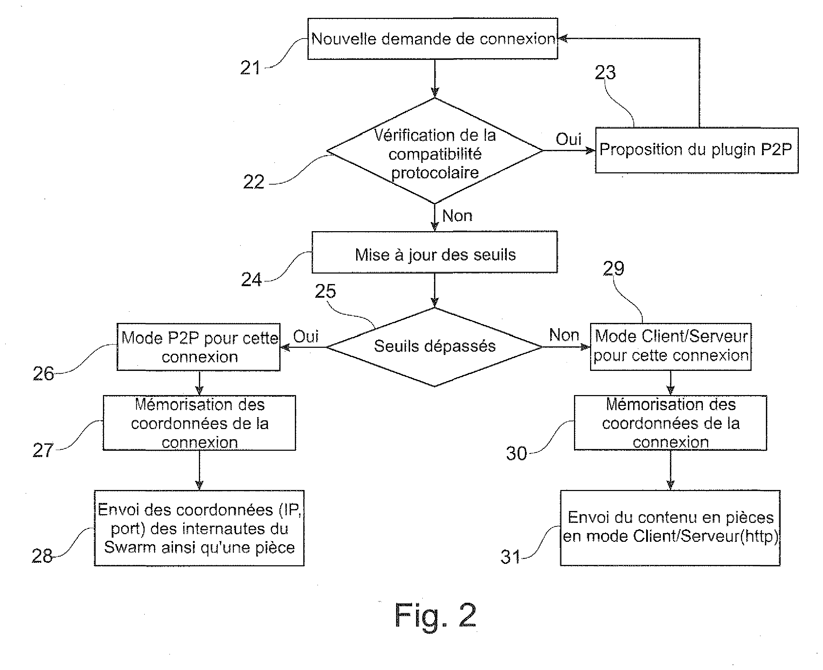

Le module manager 11 fait le choix, en fonction des limites fixées par le module qualité de service 12, du mode de communication : client/serveur ou P2P. Les différentes tâches du module manager 11 sont présentées sur la figure 2.

Lors d'une nouvelle demande de connexion par un internaute, à l'étape 21, le module manager détermine à l'étape 22 si l'internaute dispose du programme adapté à recevoir le contenu. Dans la négative, il permet à l'internaute de télécharger le programme sous forme de plug-in à l'étape 23. Dans l'affirmative, le module manager met à jour à l'étape 24 les seuils qui déterminent le mode de fonctionnement, client/serveur ou P2P. A l'étape 25, le module manager détermine si les seuils sont dépassés.

Si oui, l'internaute est conduit à l'étape 26 à télécharger le contenu en mode P2P et le module manager enregistre à l'étape 27 les coordonnées de l'internaute, puis à l'étape 28 envoie à l'internaute les coordonnées IP et le port des internautes du swarm ainsi qu'une des pièces, notamment une pièce recherchée, comme indiqué plus haut.

Si les seuils ne sont pas dépassés, le module manager permet à l'étape 29 à l'internaute de télécharger en mode client/serveur, mémorise ses coordonnées à l'étape 30 et lui adresse le contenu sous forme de pièces à l'étape 31, comme expliqué précédemment.

### Module de suivi de la Qualité

Le module 12 récupère tous les paramètres de Qualité, notamment qualité de service QoS et qualité d'expérience QoE, ainsi que des paramètres protocolaires tels que bande passante et taux de téléchargement, associés à chaque contenu, et transmis par tous les clients internautes. A partir de ces paramètres, le module 12 met à jour les seuils, notamment la limite du nombre de connexions autorisées en mode client /serveur, la bande passante maximale par connexion, et détermine les pièces les plus manquantes dans le swarm.

Les paramètres et les seuils peuvent changer en fonction du contenu échangé dans le swarm. En particulier, les critères et les seuils de qualité d'un contenu vidéo ne sont pas les mêmes que pour une page Web statique.

### Module de préparation du contenu

Le module 13 découpe le contenu à diffuser en petites pièces transportables sur chacun des modes de communication client/serveur ou P2P et calcule pour chacune des pièces un identifiant, de préférence le hash.

La taille des pièces dépend essentiellement du type du contenu (vidéo « streaming » ou « live », contenu statique, ..) et de sa taille. Pour le streaming et le live la taille des pièces dépendra également du codage utilisé sur le contenu. Dans ce cas de figure (Streaming ou live) la taille des pièces peut varier de 125Ko à 500Ko. Pour les contenus statiques la taille peut varier de 65Ko à 1Mo.

Le programme installé sous forme de plug-in au niveau du navigateur du client permet au navigateur de récupérer le contenu en mode client/serveur avec le format P2P, sous forme de pièces avec leurs informations associées (Numéro des pièces, leurs tailles et leurs identifiants).

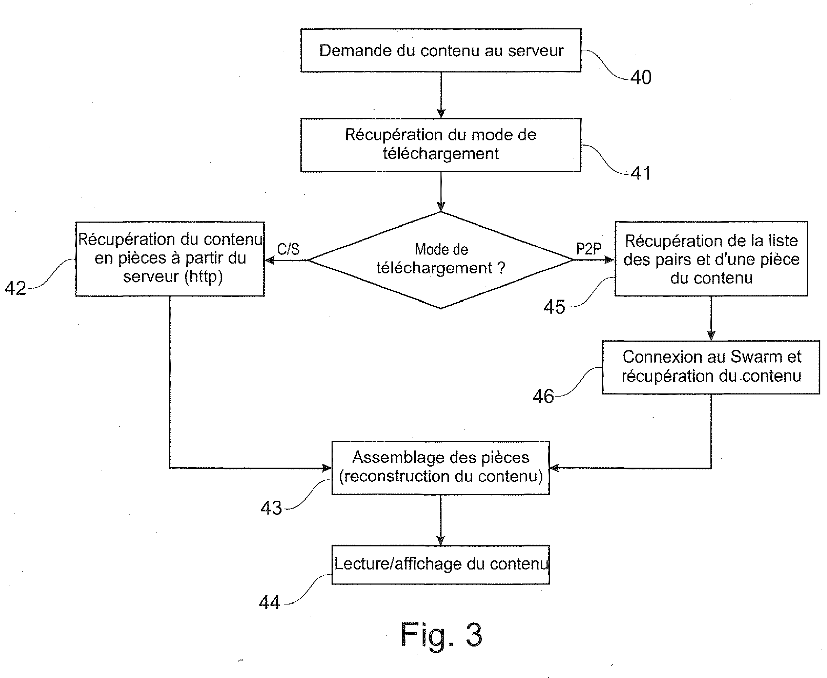

On a illustré à la figure 3 le fonctionnement de ce programme.

A l'étape 40, l'internaute s'est connecté au serveur de contenu 2.

Le programme récupère à l'étape 41, du serveur de contenu, le mode de téléchargement.

Dans le cas où celui-ci est le mode client/serveur, le programme récupère à l'étape 42 le contenu directement du serveur, sous forme de pièces, comme indiqué plus haut, qui sont ensuite assemblées à l'étape 43 pour reconstruire le contenu, et permettre son utilisation par exemple par lecture ou affichage à l'étape 44.

Dans le cas où le mode de téléchargement est le mode P2P, le programme récupère à l'étape 45 la liste des pairs et une pièce du contenu, de préférence la plus recherchée, comme expliqué précédemment, afin de s'intégrer dans le swarm à l'étape 46 pour récupérer les autres pièces du contenu.

Ensuite, la reconstruction du contenu peut avoir lieu à l'étape 43 et son utilisation à l'étape 44.

L'invention n'est pas limitée aux exemples qui viennent d'être décrits.

L'expression « comportant » doit se comprendre comme étant synonyme de « comportant au moins un ».

## Revendications

1. Procédé de diffusion d'un contenu dans un réseau informatique comportant un serveur de contenu (2) disposant du contenu à diffuser, et une pluralité de clients (3) cherchant à récupérer ledit contenu, le procédé étant tel que le contenu est servi en mode client/serveur à au moins un client sous forme de pièces identifiées avec une information associée, comportant un numéro et un identifiant pour chacune de ces pièces, et permettant sa diffusion ultérieure en mode P2P,
procédé dans lequel le serveur de contenu (2) commence à servir en mode client/serveur les premiers clients, répertorie les clients (3) qui ont déjà récupéré une partie du contenu et adresse à un nouveau client cherchant à récupérer le contenu l'adresse IP d'au moins un autre client auprès duquel il peut récupérer au moins une pièce de ce contenu,
le contenu étant servi en mode client/serveur au/aux premier/ premiers client/clients cherchant à le récupérer, puis le serveur diffusant ce contenu en mode P2P aux clients suivants, tout en gardant un mode client/serveur avec ledit/lesdits premier/ premiers client/clients, procédé dans lequel le serveur de contenu (2) détermine la ou les pièces les plus manquantes dans le swarm, et dans lequel le serveur de contenu (2) adresse à un nouveau client au moins l'une des pièces identifiées comme les plus manquantes afin de faciliter son intégration dans le swarm.

2. Procédé selon la revendication 1, l'information associée comportant le hash du contenu.

3. Procédé selon l'une quelconque des revendications 1 ou 2, dans lequel un module de suivi de qualité de service récupère au moins un paramètre de qualité de service des clients.

4. Procédé selon la revendication 3, dans lequel le nombre de connexions autorisées client/serveur, correspondant au nombre de connexions maximal avant que le serveur bascule en mode P2P, est fonction dudit au moins un paramètre.

5. Procédé selon l'une quelconque des revendications 1 à 4, comportant la fourniture par le serveur de contenu à un client d'un programme à installer, notamment sous forme de plug-in au niveau du navigateur de ce client pour pouvoir récupérer le contenu en mode client/serveur avec un format P2P et recevoir la liste des clients du serveur de contenu.

6. Procédé selon l'une quelconque des revendications 1 à 5, dans lequel on détermine le mode de diffusion du contenu en temps réel, client/serveur ou P2P, en fonction de seuils prédéfinis, notamment QoS et QoE, des clients récupérant le contenu.

7. Procédé selon l'une quelconque des revendications précédentes, dans lequel on permet la diffusion du contenu, en mode P2P, *via* les navigateurs des clients.

8. Produit programme d'ordinateur, comportant des instructions enregistrées sur un support ou téléchargées, qui lorsque le programme est exécuté sur l'ordinateur d'un client, conduisent celui-ci à installer sur l'ordinateur une application qui, à partir du navigateur du client, lors de la connexion à un serveur de contenu disposant d'un contenu à diffuser et agencé pour mettre en oeuvre le procédé tel que défini dans l'une quelconque des revendications précédentes, conduit l'ordinateur à mettre en oeuvre les étapes consistant à:
- télécharger le contenu depuis le serveur en mode client/serveur sous forme de pièces identifiées avec une information associée, comportant un numéro et un identifiant pour chacune des pièces, et permettant sa diffusion ultérieure en mode P2P à d'autres clients ou, si le serveur n'offre pas cette possibilité,
- télécharger depuis le serveur une liste de clients disposant de pièces du contenu, de façon à le récupérer dans un mode P2P auprès de ces clients s'étant connectés au serveur de contenu, ainsi que une ou des pièces identifiées par le serveur comme les plus manquantes dans le swarm, afin de faciliter l'intégration du client dans le swarm.

## Patentansprüche

1. Verfahren zum Senden von Inhalt in einem Datennetz, das einen Inhaltsserver (2), in dem zu sendender Inhalt angeordnet ist, und mehrere Clients (3), die versuchen, den Inhalt wiederzugewinnen, umfasst,
wobei das Verfahren derart ist, dass der Inhalt im Client/Server-Modus für wenigstens einen Client in Form identifizierter Teile zusammen mit zugeordneten Informationen, die eine Nummer und eine Kennung für jeden dieser Teile enthalten und dessen späteres Senden im P2P-Modus ermöglichen, bereitgestellt wird,
wobei in dem Verfahren der Inhaltsserver (2) beginnt, die ersten Clients im Client/Server-Modus zu bedienen, die Clients (3), die bereits einen Teil des Inhalts wiedergewonnen haben, verzeichnet und an einen neuen Client, der versucht, den Inhalt wiederzugewinnen, die IP-Adresse wenigstens eines anderen Clients, in dessen Umgebung er wenigstens einen Teil dieses Inhalts wiedergewinnen kann, schickt,
wobei der Inhalt für den einen oder die mehreren ersten Clients, die versuchen, ihn wiederzugewinnen, im Client/Server-Modus bereitgestellt wird und dann der Server diesen Inhalt im P2P-Modus an die folgenden Clients sendet und dabei einen Client/Server-Modus mit dem einen oder den mehreren ersten Clients beibehält,
wobei in dem Verfahren der Inhaltsserver (2) den einen oder die mehreren Teile bestimmt, die in dem Schwarm am meisten fehlen, und wobei der Inhaltsserver (2) an einen neuen Client wenigstens einen der Teile, die als am meisten fehlend identifiziert werden, schickt, um dessen Integration in den Schwarm zu erleichtern.

2. Verfahren nach Anspruch 1, wobei die zugeordneten Informationen den Hash-Code des Inhalts enthalten.

3. Verfahren nach einem der Ansprüche 1 oder 2, wobei ein Dienstqualitäts-Überwachungsmodul wenigstens einen Dienstqualitätsparameter der Clients wiedergewinnt.

4. Verfahren nach Anspruch 3, wobei die Anzahl zugelassener Client/Server-Verbindungen, die der maximalen Anzahl von Verbindungen entspricht, bevor der Server in den P2P-Modus schaltet, eine Funktion des wenigstens einen Parameters ist.

5. Verfahren nach einem der Ansprüche 1 bis 4, das umfasst, dass der Inhaltsserver an einen Client ein zu installierendes Programm insbesondere in Plug-in-Form auf Höhe des Internet-Browsers dieses Clients liefert, um den Inhalt im Client/Server-Modus in einem P2P-Format wiedergewinnen und die Liste der Clients des Inhaltsservers empfangen zu können.

6. Verfahren nach einem der Ansprüche 1 bis 5, wobei die Sendebetriebsart für den Inhalt, Client/Server oder P2P, in Echtzeit als Funktion von im Voraus definierten Schwellenwerten, insbesondere QoS und QoE, der Clients, die den Inhalt wiedergewinnen, bestimmt wird.

7. Verfahren nach einem der vorhergehenden Ansprüche, wobei das Senden des Inhalts im P2P-Modus über die Internet-Browser der Clients ermöglicht wird.

8. Computerprogrammprodukt, das Befehle enthält, die auf einen Träger aufgezeichnet sind oder ferngeladen werden und die dann, wenn das Programm auf dem Computer eines Clients ausgeführt wird, diesen dazu veranlassen, auf dem Computer eine Anwendung zu installieren, die anhand des Internet-Browsers des Clients beim Anschluss an den Inhaltsserver, in dem zu sendender Inhalt angeordnet ist und dafür ausgelegt ist, das Verfahren wie in einem der vorhergehenden Ansprüche definiert auszuführen, den Computer veranlasst, die folgenden Schritte auszuführen, die darin bestehen:
- den Inhalt von dem Server im Client/Server-Modus in Form von identifizierten Teilen zusammen mit zugeordneten Informationen, die eine Nummer und eine Kennung für jeden der Teile enthalten und dessen späteres Senden im P2P-Modus an andere Clients erlauben, fernzuladen, falls der Server diese Möglichkeit nicht bietet,
- von dem Server eine Liste von Clients, in denen Teile des Inhalts angeordnet sind, derart, dass er in einem P2P-Modus in der Umgebung dieser Clients, die mit dem Inhaltsserver verbunden sind, wiedergewonnen wird, sowie einen oder mehrere Teile, die von dem Server als in dem Schwarm am meisten fehlend identifiziert werden, fernzuladen, um die Integration des Clients in den Schwarm zu erleichtern.

## Claims

1. Method for broadcasting a piece of content in an IT network including a content server (2) having the piece of content to be broadcast, and a plurality of clients (3) seeking to retrieve said piece of content,
the method being such that the piece of content is served in client/server mode to at least one client in the form of parts identified with an associated item of information, comprising a number and an identifier for each of said parts, and allowing its subsequent broadcast in P2P mode,
in which method, the content server (2) starts to serve in client/server mode the first clients, lists the clients (3) that have already retrieved one part of the piece of content and addresses to a new client seeking to retrieve the piece of content the IP address of at least one other client from which it can retrieve at least one part of this content,
the piece of content being served in client/server mode to the first client/clients seeking to retrieve it, the server then broadcasting this piece of content in P2P mode to the following clients, while keeping a client/server mode with said first client/clients,
in which method, the content server (2) determines the part or parts most often missing in the swarm, and wherein the content server (2) addresses to a new client at least one of the parts identified as most often missing in order to ease its integration into the swarm.

2. Method according to Claim 1, the associated item of information including the hash of the piece of content.

3. Method according to either one of Claims 1 and 2, wherein a module for monitoring the quality of service retrieves at least one quality of service parameter from the clients.

4. Method according to Claim 3, wherein the number of authorized client/server connections, corresponding to the maximum number of connections before the server switches to P2P mode, is a function of said at least one parameter.

5. Method according to any one of Claims 1 to 4, including the provision by the content server to a client of a program to be installed, notably in the form of a plug-in on the browser of this client, to be able to retrieve the piece of content in client/server mode with a P2P format and to receive the list of the clients of the content server.

6. Method according to any one of Claims 1 to 5, wherein the mode of broadcasting the piece of content in real time, client/server or P2P, is determined, as a function of predefined thresholds, particularly QoS and QoE, of the clients retrieving the piece of content.

7. Method according to any one of the preceding claims, wherein the broadcasting of the piece of content is allowed, in P2P mode, *via* the browsers of the clients.

8. Computer program product, including instructions stored on a medium or downloaded, which, when the program is executed on the computer of a client, lead said client to install on the computer an application that, from the browser of the client, upon connection to a content server having a piece of content to be broadcast and arranged to implement the method such as defined in any one of the preceding claims, leads the computer to implement steps consisting in:
- downloading the piece of content from the server in client/server mode in the form of parts identified with an associated item of information, including a number and an identifier for each of the parts, and allowing its subsequent broadcast in P2P mode to other clients or, if the server does not offer this possibility,
- downloading, from the server, a list of clients having parts of the piece of content so as to retrieve it in a P2P mode from these clients that have connected to the content server, and one or more parts identified by the server as being the most often missing in the swarm, in order to facilitate the integration of the client into the swarm.
